# EUROPEAN PATENT APPLICATION

(11) **EP 2 256 729 A1**
(43) Date of publication of application: **01.12.2010**
(21) Application number: 09305473.2
(22) Date of filing: 25.05.2009
(51) Int. Cl.: G11B 7/125, G11B 7/135, G11B 7/0065

(54) **Holographic storage system using homodyne detection**

(71) Applicant: Thomson Licensing SA, 92130 Issy-les-Moulineaux (FR)
(72) Inventor: Przygodda, Frank, 78050 Villingen-Schwenningen (DE); Malki, Oliver, 78176 Fuetzen (DE); Trautner, Heiko, 78089 Unterkirnach (DE)
(74) Representative: Schmidt-Uhlig, Thomas

(57) **Abstract**

The present invention relates to an apparatus (1) for reading from holographic storage media (13) using a homodyne detection scheme.

According to the invention, the apparatus (1) for reading from a holographic storage medium (13), with a light source (2') for generating a reference beam (5) and a local oscillator beam (20), and an objective lens (12) for focusing the reference beam (5) into the holographic storage medium in order to generate a reconstructed object beam (14). The coherence length of the reference beam (5) and the local oscillator beam (20) is shorter than twice the distance between the objective lens (12) and the holographic storage medium (13).

## Description

The present invention relates to an apparatus for reading from holographic storage media, and more specifically to an apparatus for reading from holographic storage media using a homodyne detection scheme, which has an improved performance. The invention further relates to a method for reading from a holographic storage medium performed by said apparatus.

In holographic data storage digital data are stored by recording the interference pattern produced by the superposition of two coherent laser beams, where one beam, the so-called 'object beam', is modulated by a spatial light modulator and carries the information to be recorded. The second beam serves as a reference beam. The interference pattern leads to modifications of specific properties of the storage material, which depend on the local intensity of the interference pattern. Reading of a recorded hologram is performed by illuminating the hologram with the reference beam using the same conditions as during recording. This results in the reconstruction of the recorded object beam.

One advantage of holographic data storage is an increased data capacity. Contrary to conventional optical storage media, the volume of the holographic storage medium is used for storing information, not just a few layers. One further advantage of holographic data storage is the possibility to store multiple data in the same volume, e.g. by changing the angle between the two beams or by using shift multiplexing, etc. Furthermore, instead of storing single bits, data are stored as data pages. Typically a data page consists of a matrix of light-dark-patterns, i.e. a two dimensional binary array or an array of grey values, which code multiple bits. This allows to achieve increased data rates in addition to the increased storage density. The data page is imprinted onto the object beam by the spatial light modulator (SLM) and detected with an array detector.

Recently, a homodyne detection scheme has been proposed for a holographic data storage system. Homodyne detection denotes a detection technique, where a signal carrier is superimposed coherently with the signal of a local oscillator. In holographic data storage the signal carrier is the reconstructed object beam read-out from the holographic storage medium. The local oscillator is usually a plane wavefront generated with the same light source as the read-out beam. Both beams are superimposed coherently on the array detector, where constructive and destructive interference occurs.

For example, US 2008/0130461 discloses a holographic storage system using a homodyne detection scheme. For homodyne detection a first light beam diffracted at a hologram and a second light beam reflected or transmitted by a reflecting layer of a holographic storage medium are superimposed on a detector. In this document bit-wise data storage is used, i.e. each hologram encodes a single bit, not a complete data page.

The principle of homodyne detection is advantageously employed if a phase SLM is used for data coding. In this case the data pixels of the object beam have the phase 0 or π, representing two states of a modulation code. Depending on the phase relation with respect to the local oscillator, constructive and destructive interference results in bright or dark pixels on the detector during read-out.

Phase SLMs offer a higher optical throughput, since all pixels are in an on-state just with different phases. In contrast, an amplitude SLM blocks the light of the dark pixels. Usually the number of pixels with 0 and π phase are balanced in order to suppress the formation of a DC-peak in the focal plane. A balanced code in combination with a phase SLM ensures also a higher data page capacity compared to an amplitude SLM, where the number of on-pixels is usually smaller than that of the off-pixels.

One important advantage of homodyne detection is the amplification of the signal. Since the detected data page results from the constructive and destructive interference of the reconstructed object beam and the local oscillator, the intensity of the detected on-pixels resulting from constructive interference is even larger than the intensity of the on-pixels of the reconstructed object beam themselves. The amplification can even be increased if the local oscillator has a higher intensity than the reconstructed object beam.

It is an object of the present invention to propose an apparatus for reading from holographic storage media using a homodyne detection scheme, which has an improved performance.

According to the invention, this object is achieved by an apparatus for reading from holographic storage media, with a light source for generating a reference beam and a local oscillator beam, and an objective lens for focusing the reference beam into the holographic storage medium in order to generate a reconstructed object beam, where the coherence length of the reference beam and the local oscillator beam is shorter than twice the distance between the objective lens and the holographic storage medium. Homodyne detection is based on the coherent superposition of the reconstructed object beam and the local oscillator beam. This has the consequence that the superposition has to be done within the coherence length of the light source. If the optical paths of the reconstructed object beam and the local oscillator beam differ, a light source with a coherence length larger than this difference has to be used. It has been found that in this case disturbing light caused, for example, by reflections at the surfaces of the optical elements in the beam path is also coherent in case the path difference is smaller than the coherence length. If this disturbing light reaches the array detector, it is also amplified by the homodyne detection scheme, which leads to increased noise. A way to prevent the undesired amplification of the disturbing light is to use a special light source with a short coherence length. If the optical paths of the reconstructed object beam and the local oscillator beam are of equal length, a coherent superposition at the location of the array detector is ensured. At the same time the light resulting from disturbing reflections does not have the path length required for coherent superposition. Therefore, it is incoherently superposed on the array detector and, consequently, not amplified by the homodyne scheme. As the objective lens is an important source of disturbing reflections, using a coherence length shorter than twice the distance between the objective lens and the holographic storage medium greatly reduces the noise caused by undesired reflections. Since the objective lens is moved perpendicularly relative to the surface of the holographic storage medium for focusing, "distance" here denotes the minimum distance between the holographic storage medium and the objective lens during normal operation of the apparatus.

Favorably, the coherence length is shorter than twice the distance between two reflective surfaces in the paths of the reference beam, the local oscillator beam, and the reconstructed object beam, which are a source of disturbing reflections. Further sources of disturbing reflections are other optical elements in the paths of the reference beam, the local oscillator beam, and the reconstructed object beam. Light reflected at the back surface of an optical element and then again at the front surface of the optical element will also travel towards the array detector. If the coherence length is shorter than twice the distance between these two reflective surfaces, this light is incoherently superposed on the array detector.

Preferably, the apparatus has means for reducing the coherence length of the reference beam and the local oscillator beam. This has the advantage that it is not necessary to use a special light source with a short coherence length for generating the reference beam and the local oscillator beam. Instead, a standard light source can be used, which reduces the cost of the apparatus. Advantageously, the light source is provided with an external cavity with a mirror that is mounted on a Piezo-actuator. The Piezo-actuator is fed with a high frequency modulated drive current. Due to the fact that the mirror of the cavity is vibrated by the Piezo-actuator, the coherence length of the light source is reduced. A further option is to feed the light source with a drive current that varies with a high frequency. This leads to an increased spectral width of the light source, which is associated with a reduced coherence length. Also, an additional component can be arranged in the beam path, e.g. a multimode optical fiber, into which the light beam 3 is focused and which mixes the various propagation modes, or a vibrating diffuser.

Advantageously, the apparatus has at least one means to adjust the optical path length in the optical path of the local oscillator beam, e.g. an adjustable delay line and/or an adjustable phase shifting optical element. As the optical paths of the reconstructed object beam and the local oscillator beam need to be equal, the means to adjust the optical path length allows to ensure a coherent superposition at the location of the array detector. Of course, the means to adjust the optical path length can likewise be located in the optical path of the reference beam.

Preferably, the apparatus further has an optical path length controller for varying the optical path length of the local oscillator beam, e.g. a delay line controller or a phase shift controller. On the one hand, this allows to adjust the path length of the local oscillator beam in case the path length of the reconstructed object beam changes due to aging of the apparatus or the like. On the other hand, the optical path length controller enables the detection of two quadrature images of a reconstructed data page. For this purpose the optical path length controller varies the path length of the local oscillator beam by a quarter of the wavelength of the local oscillator beam. In a first step a hologram stored in the holographic storage medium is illuminated with the reference beam for generating a reconstructed object beam. Then a first interference pattern of the reconstructed object beam and the local oscillator beam is detected. Subsequently the path length of the local oscillator beam is varied by a quarter of the wavelength of the local oscillator beam and a second interference pattern of the reconstructed object beam and the local oscillator beam is detected. By numerically combining the two quadrature images an improved detected data page is obtained, in which effects caused by local phase variations of the reconstructed object beam are greatly reduced.

Favorably, the apparatus further has a writing path with at least one means for adjusting the optical path length of an object beam to the optical path length of the reference beam, e.g. an adjustable delay line. For recording a hologram a coherent superposition of the object beam and the reference beam inside the holographic storage medium is necessary. Due to the proposed use of a short coherence length, the optical paths of the two light beams have to be well matched. The means for adjusting the optical path length helps to ensure the equal path length of both light beams. Of course, it is likewise possible to match the path lengths during manufacturing of the apparatus. In this case the at least one means for adjusting the optical path length is not needed.

For a better understanding the invention shall now be explained in more detail in the following description with reference to the figures. It is understood that the invention is not limited to this exemplary embodiment and that specified features can also expediently be combined and/or modified without departing from the scope of the present invention as defined in the appended claims. In the figures:
- Fig. 1: illustrates an apparatus for reading from holographic storage media using a counter- propagating architecture with homodyne detection,
- Fig. 2: shows the apparatus of Fig. 1 supplemented with a writing path,
- Fig. 3: depicts a detected data page for the apparatus of Figs. 1 or 2,
- Fig. 4: illustrates an exemplary apparatus for reading from holographic storage media with homodyne detection according to the invention,
- Fig. 5: shows the apparatus of Fig. 5 supplemented with a writing path, and
- Fig. 6: depicts a detected data page for the apparatus of Figs. 4 or 5.

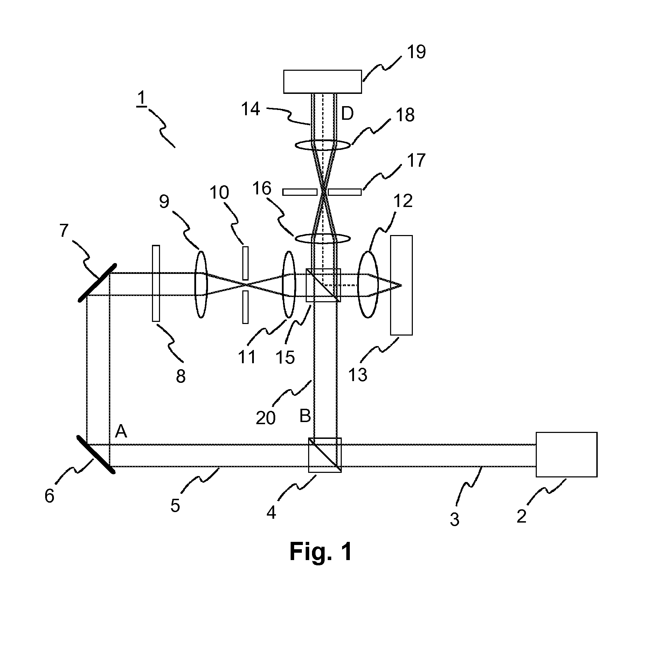

Fig. 1 illustrates an apparatus 1 for reading from a holographic storage medium 13 using a counter-propagating architecture with homodyne detection. Of course, the invention is not limited to a counter-propagating architecture. A light source 2 emits a light beam 3, which is split by a first beam splitter 4 into a reference beam 5 and a local oscillator beam 20. The light source 2 has a large coherence length. The reference beam 5 is directed towards a holographic storage medium 13 by two mirrors 6, 7. Before being focused into a holographic storage layer of the holographic storage medium 13 by a first objective lens 12, the reference beam 5 passes through an optional phase mask 8 for imprinting a phase pattern on the reference beam 5 and an optional spatial filter consisting of two further objective lenses 9, 11 and a filter aperture 10. Due to the interaction of the reference beam 5 and a hologram located in the holographic storage layer of the holographic storage medium 13, a reconstructed object beam 14 is generated. This reconstructed object beam 14 is collimated by the first objective lens 12 and directed onto an array detector 19, e.g. a CCD camera, by a second beam splitter 15. Before it impinges on the array detector 19, the reconstructed object beam 14 passes through a further optional spatial filter consisting of two objective lenses 16, 18 and a filter aperture 17. At the location of the array detector 19 the reconstructed object beam 14 interferes with the local oscillator beam 20. In the figure the local oscillator beam 20 and the reconstructed object beam 14 are slightly shifted for better visibility. The path B, where the plane wavefront of the local oscillator beam 20 is sent to the array detector 19, has an arbitrary length. Because of the large coherence length of the light source 2 the local oscillator beam 20 and the reconstructed object beam 14 are mutually coherent.

The homodyne detection thus enables an amplification of the reconstructed object beam 14. The mutual coherence is also given for disturbing light, e.g. due to a reflection at the first objective lens 12. Such an undesired reflection, which is illustrated by a dashed line along the path D from the first objective lens 12 to the array detector 19, also reaches the array detector 19 and is amplified as well.

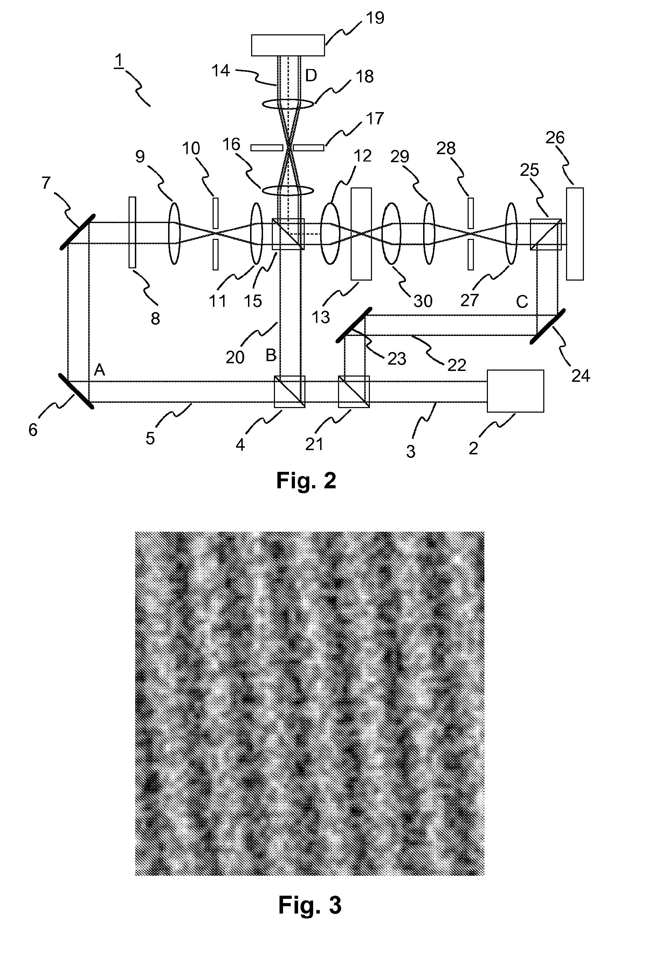

Fig. 2 shows the apparatus of Fig. 1 supplemented with a writing path. A third beam splitter 21 splits an object beam 22 from the light beam 3 emitted by the light source 2, which is directed by two further mirrors 23, 24 and a fourth beam splitter 25 onto a reflective spatial light modulator 26. The reflective spatial light modulator 26 imprints a data page, i.e. a data pattern, onto the object beam 22. The reflected object beam 22 passes through the fourth beam splitter 25 and a further optional spatial filter consisting of two objective lenses 27, 29 and a filter aperture 28 and is focused by a second objective lens 30 into the holographic storage layer of the holographic storage medium 13. Due to the interference between the object beam 22 and the reference beam 5 a hologram is recorded in the holographic storage layer of the holographic storage medium 13. In Fig. 2 the path A of the reference beam 5 and the path C of the object beam 22 do not necessarily have the same length from the third beam splitter 21 to the holographic storage medium 13.

Fig. 3 shows a detected data page obtained with the apparatus of Fig. 1 or 2. A slightly tilted wavefront has been coherently added, which represents a disturbing reflection at one of the optical elements. The coherent superposition results in a fringe pattern overlaying the data pattern.

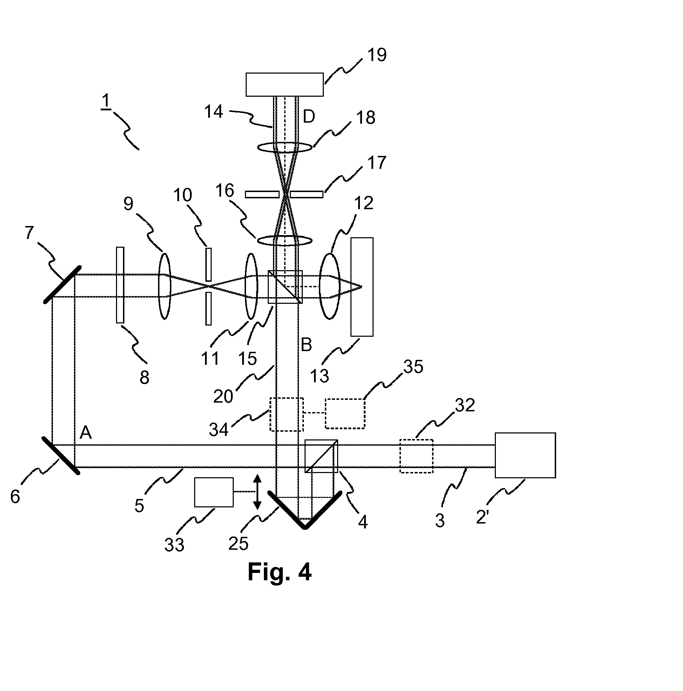

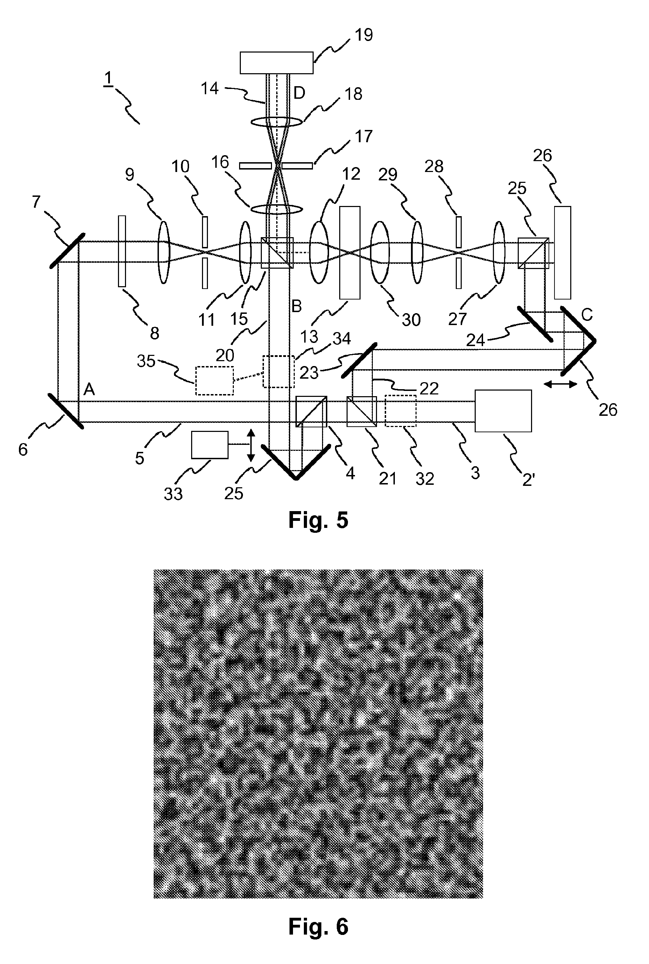

A modified apparatus 1 for reading from a holographic storage medium 13 using a counter-propagating architecture with homodyne detection is depicted in Fig. 4. Of course, the invention is not limited to a counter-propagating architecture, it is likewise applicable to other architectures such as a coaxial or a common aperture architecture. The apparatus 1 of Fig. 4 is largely identical to the apparatus 1 of Fig. 1. However, in this case a light source 2' with a short coherence length is used. Alternatively, the coherence length is reduced by an additional component 32 arranged in the beam path, e.g. a multimode optical fiber, into which the light beam 3 is focused and which mixes the various propagation modes, or a vibrating diffuser. It is also possible to the provide the light source 2' with an external cavity with a mirror that is mounted on a Piezo-actuator and is fed with a high frequency modulated drive current. A further option is to feed the light source 2' with a drive current that is high frequency modulated. In any case the coherence length is shorter than twice the distance between the objective lens 12 and the holographic storage medium. As a consequence an additional adjustable delay line 25 is provided, which is movable in the direction of the arrow and which ensures the same path length for the path B of the local oscillator beam 20, i.e. from the first beam splitter 4 to the array detector 19, and the path of the reconstructed object beam 14, i.e. from the first beam splitter 4 via the path A to the holographic storage medium 13 plus the path from the holographic storage medium 13 to the array detector 19. Of course, it is likewise possible to design the setup in such a way that the described paths are equal without the additional delay line 25. However, the additional delay line 25 has the further advantage that it can be used to vary the path length of the local oscillator beam 20 by λ/4 using a delay line controller 33 in order to obtain two quadrature images. In combination the two quadrature images contain the complete phase information of the reconstructed object beam 14 regardless of any phase errors introduced, for example, by the holographic storage medium. Instead of or in addition to the additional delay line 25 also another optical element 34 with phase shifting capabilities can be used, e.g. a liquid crystal element with an electrically controllable optical thickness. In this case the phase shifting optical element 34 is controlled by a phase shifting controller 35. This solution has the advantage that no movable component is needed, which simplifies the adjustment of the optical paths. Since the path length of light emerging due to a reflection at the first objective lens 12 is different from the path length of the reconstructed object beam 14 or the local oscillator beam 20, it is superposed incoherently on the array detector 19. As a result it is not amplified by the homodyne detection scheme. Advantageously, the coherence length is also shorter than twice the distance between two reflective surfaces in the paths of the reference beam 5, the local oscillator beam 20, and the reconstructed object beam 14, which are a source of disturbing reflections. In this case also other reflections, e.g. from the second beam splitter 15, or the phase mask 8, or multiple reflections, are not amplified by the homodyne detection scheme. The apparatus 1 of Fig. 4 can likewise be supplemented with a writing path. This is depicted in Fig. 5. The writing path is largely identical to the writing path described with reference to Fig. 2. However, an delay line 26 is provided, which ensures the same path length for the paths A and C of the reference beam 5 and the object beam 22 from the third beam splitter 21 to the holographic storage medium 13. Again, the setup can likewise be designed in such way that the described paths are inherently equal without the delay line 26.

Fig. 6 shows a detected data page obtained with the apparatus of Fig. 4 or 5. The same disturbing reflection as in Fig. 3 has been added. In this case, however, the disturbing reflection has been incoherently added. In contrast to Fig. 3, no disturbing fringes are visible on the detected data page.

## Claims

1. Apparatus (1) for reading from a holographic storage medium (13), with a light source (2') for generating a reference beam (5) and a local oscillator beam (20), and an objective lens (12) for focusing the reference beam (5) into the holographic storage medium in order to generate a reconstructed object beam (14), **characterized in that** the coherence length of the reference beam (5) and the local oscillator beam (20) is shorter than twice the distance between the objective lens (12) and the holographic storage medium (13).

2. Apparatus (1) according to claim 1, **wherein** the coherence length is shorter than twice the distance between two reflective surfaces in the paths of the reference beam (5), the local oscillator beam (20), and the reconstructed object beam (14), which are a source of disturbing reflections.

3. Apparatus (1) according to claim 1 or 2, **wherein** the coherence length of the reference beam (5) and the local oscillator beam (20) is the coherence length of the light source (2').

4. Apparatus (1) according to claim 1 or 2, **further** having means (32) for reducing the coherence length of the reference beam (5) and the local oscillator beam (20).

5. Apparatus (1) according to one of claims 1 to 4, **further** having at least one means (25, 34) for adjusting the optical path length in the optical path of the local oscillator beam (25) or the reference beam (5).

6. Apparatus (1) according to claim 5, **further** having an optical path length controller (33, 35) for varying the path length of the local oscillator beam (25) or the reference beam (5).

7. Apparatus (1) according to claim 6, **wherein** the optical path length controller (33, 35) varies the path length of the local oscillator beam (25) or the reference beam (5) by a quarter of the wavelength of the local oscillator beam (25) in order to obtain two quadrature images.

8. Apparatus (1) according to one of claims 5 to 7, **wherein** the at least one means (25, 34) for adjusting the optical path length includes an adjustable delay line (25) and/or an adjustable phase shifting optical element (34).

9. Apparatus (1) according to one of the preceding claims, **further** having a writing path with an adjustable delay line (26) for adjusting the optical path length of an object beam (22) to the optical path length of the reference beam (5).

10. Method for reading from a holographic storage medium (13), **having** the steps of:
- generating a reference beam (5) and a local oscillator beam (20) with a coherence length that is shorter than twice the distance between the holographic storage medium (13) and an objective lens (12) for focusing the reference beam (5) into the holographic storage medium (13);
- illuminating a hologram stored in the holographic storage medium (13) with the reference beam (5) for generating a reconstructed object beam (14);
- detecting a first interference pattern of the reconstructed object beam (14) and the local oscillator beam (20);
- varying the path length or the phase of the local oscillator beam (25) by a quarter of the wavelength of the local oscillator beam (25); and
- detecting a second interference pattern of the reconstructed object beam (14) and the local oscillator beam (20).
